# EUROPEAN PATENT APPLICATION

(11) **EP 4 123 493 A1**
(43) Date of publication of application: **25.01.2023**
(21) Application number: 21186519.1
(22) Date of filing: 19.07.2021
(51) Int. Cl.: G06F 30/10, B29C 59/00, B60R 13/00, G06F 111/16

(54) **VIRTUAL DASH AND VEHICLE COVERYING SYSTEMS AND METHODS**

(71) Applicant: Benecke-Kaliko AG, 30419 Hannover (DE)
(72) Inventor: Shala, Mergim, 30419 Hannover (DE); Thelemann, Axel, 30419 Hannover (DE); Zuern, Rene, 30419 Hannover (DE)
(74) Representative: Continental Corporation

(57) **Abstract**

A virtual dashboard cover layer development system is disclosed. One general aspect includes a virtual dashboard cover layer development system having an interface, a memory storage and one or more processors. The one or more processors are configured to: receive component cad data for a dashboard component via the interface, create a 3d model based on the received component cad data, convert the 3d model to a polygon mesh checkered design, create a virtual layout design, determine component design issues for the created virtual layout, resolve the determined design issues, and create an approved layout and store in the memory storage.

## Description

### FIELD

The disclosure generally relates to systems and methods for developing virtual coverings for vehicles and the like.

### BACKGROUND

A dashboard can be considered a control panel set of a vehicle, aircraft, boat, and the like. The dashboard can also be referred to as a dash, instrument panel or fascia. The dashboard Displays instrumentation and controls for vehicle operation.

Dashboards display a variety of information and control input including, for example, speedometer, tachometer, odometer, engine coolant temperature, fuel gauge, turn indicators, gear shift position, seat belt warning lights, parking brake warning lights engine malfunction lights and the like.

In addition to providing information and allowing control of vehicle systems dashboards are also important for their style and fashion.

Typically dashboards comprise one or more layers of plastic materials such as PVC, ABS, in the like. One technique to improve the appearance of dashboards is to apply a covering over the plastic , and thus avoid the plastic look. However, dashboards typically have a variety of curved surfaces that caused coverings to be difficult to apply. For example, recovering can bunch in one region or expand or compress in another region camera show wrinkles, and the like.

What is needed are techniques to apply and/or design coverings for vehicle dashboards then avoid or mitigate these problems.

### BRIEF DESCRIPTION OF THE DRAWINGS

Fig. 1 is a diagram illustrating a virtual covering development system 100 in accordance with one or more embodiments.
Fig. 2 is a diagram illustrating a method 200 of operating the virtual development system 100 in accordance with one or more embodiments.
Fig. 3 is a diagram illustrating a method 300 of implementing a virtual design created by the system 100 in accordance with one or more embodiments.
Figs. 4A to 4D illustrate an example virtual layout without using a polygon mesh checkered design in accordance with one or more embodiments.
Figs. 5A to 5F illustrate an example virtual layout using a polygon mesh checkered design in accordance with one or more embodiments.

### DETAILED DESCRIPTION

The following description of the variations is merely illustrative in nature and is in no way intended to limit the scope of the disclosure, its application, or uses. The description is presented herein solely for the purpose of illustrating the various embodiments of the disclosure and should not be construed as a limitation to the scope and applicability of the disclosure. In the summary of the disclosure and this detailed description, each numerical value should be read once as modified by the term "about" (unless already expressly so modified), and then read again as not so modified unless otherwise indicated in context. Also, in the summary of the disclosure and this detailed description, it should be understood that a value range listed or described as being useful, suitable, or the like, is intended that any and every value within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors had possession of the entire range and all points within the range.

Unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of concepts according to the disclosure. This description should be read to include one or at least one and the singular also includes the plural unless otherwise stated.

The terminology and phraseology used herein is for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited.

Also, as used herein any references to "one embodiment" or "an embodiment" means that a particular element, feature, structure, or characteristic described in connection with the embodiment is included in at least one embodiment. The appearances of the phrase "in one embodiment" in various places in the specification are not necessarily referring to the same embodiment.

The foregoing description of the embodiments has been provided for purposes of illustration and description. Example embodiments are provided so that this disclosure will be sufficiently thorough, and will convey the scope to those who are skilled in the art. Numerous specific details are set forth such as examples of specific components, devices, and methods, to provide a thorough understanding of embodiments of the disclosure, but are not intended to be exhaustive or to limit the disclosure. It will be appreciated that it is within the scope of the disclosure that individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Also, in some example embodiments, well-known processes, well-known device structures, and well-known technologies are not described in detail. Further, it will be readily apparent to those of skill in the art that in the design, manufacture, and operation of apparatus to achieve that described in the disclosure, variations in apparatus design, construction, condition, erosion of components, gaps between components may present, for example.

Examples can include subject matter such as a method, means for performing acts or blocks of the method, at least one machine-readable medium including instructions that, when performed by a machine cause the machine to perform acts of the method or of an apparatus or system for concurrent communication using multiple communication technologies according to embodiments and examples described herein.

A dashboard can be considered a control panel set of a vehicle, aircraft, boat, and the like. The dashboard can also be referred to as a dash, instrument panel or fascia. The dashboard Displays instrumentation and controls for vehicle operation.

Dashboards display a variety of information and control input including, for example, speedometer, tachometer, odometer, engine coolant temperature, fuel gauge, turn indicators, gear shift position, seat belt warning lights, parking brake warning lights engine malfunction lights and the like.

In addition to providing information and allowing control of vehicle systems dashboards are also important for their style and fashion.

Typically dashboards comprise one or more layers of plastic materials such as PVC, ABS, in the like. One technique to improve the appearance of dashboards is to apply a covering over the plastic , and thus avoid the plastic look. However, dashboards typically have a variety of curved surfaces that caused coverings to be difficult to apply. For example, recovering can bunch in one region or expand or compress in another region camera show wrinkles, and the like.

For the production of grained surfaces/coverings as well as sheet goods, processing aids such as embossing rollers, which are made of steel, ceramic, silicone or similar materials, embossed paper, grain tapes or similar are used. These are produced as negative tools. These coverings are usually created and applied by hand. Usually a small tile (molette = roller embossing) is used for this purpose, which is then joined seamlessly. These textures are still recognizable as a repeat. A direct comparison between the virtual grain texture and the real (physical) texture has not been possible.

Furthermore, these textures can only be applied to smooth, flat plains, without structures; if macrostructures are used for leathering, this results in warping of the surface and thus morphing of the grain texture at these particular points. These no longer match the visual appearance of the grain used at the beginning.

Another approach is to produce the part directly in the intended mold by pressure and back foaming, with the part already bearing the corresponding grain. This method is very labor and material intensive and leaves little scope for grain-related adjustments.

There are problems with the above approaches to developing textured coverings. Due to the use of very fine micro structured grains, which allow imperfections to be easily detected, warpage is typically visible during processing. The material, which is produced as a sheet does not have the possibility of a defined warpage. As a result, depending on the angle of incidence of light, the manual leathering process produces undesirable visual effects, such as shiny spots or light fractures etc. on the surface at many points of the component, such as roundings or edges, and thus an inhomogeneity in the surface structure. These imperfections are not only visually visible, but can also be experienced haptically, as a kind of sawtooth effect is also created here. An alternative to this is the in-mold process, in which the component is created directly in the corresponding mold with grain. However, to a large extent this is only possible for hard surfaces (hard plastic) with little variation in haptics.

What is needed are techniques to apply and/or design coverings for vehicle dashboards then avoid or mitigate these problems.

One or more embodiments are disclosed that design and create virtual coverings for dashboards of vehicles while mitigating typical covering issues.

Development of a grain structure adapted to the virtual pattern for defined components, which is only fully displayed in its undistorted look and feel when mounted. Critical zones are to be determined in advance so that the grain can then be adapted to the component and the "weak points" counteracted (direction of leathering, bending, scaling, warpage, glossy areas, etc.). The texture should be oriented according to the shape direction of the desired part (no allover). Furthermore, a direct transfer from "virtual reality" to solid reality is possible.

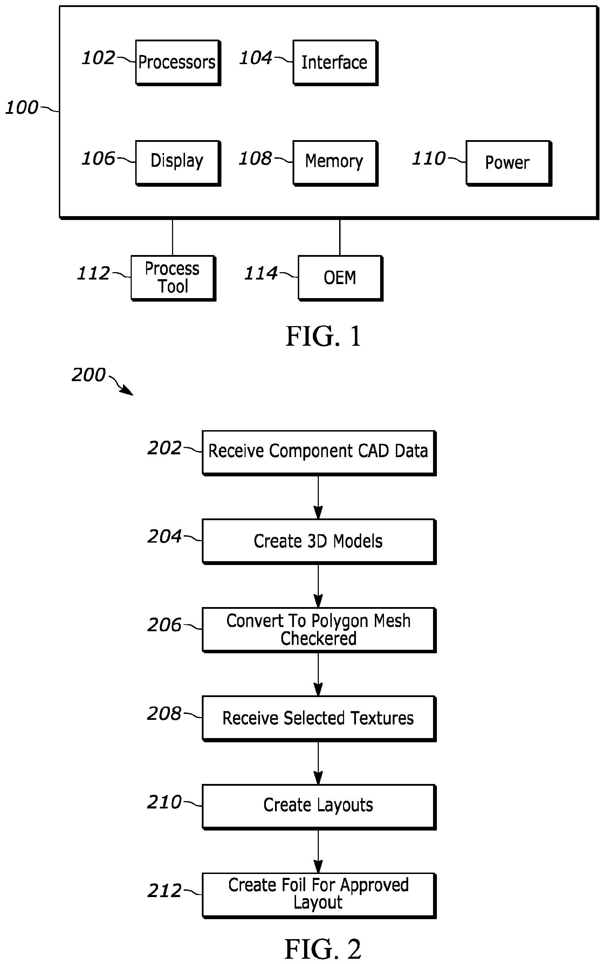

Fig. 1 is a diagram illustrating a virtual covering development system 100 in accordance with one or more embodiments. It is appreciated that the system 100 is provided for illustrative purposes and that suitable variations are contemplated.

The system 100 includes one or more processors 102, an interface 104, a display interface 106 a memory 108 and a power source 110.

The interface 104 can include networking communication, input output communication and the like.

The display interface 106 can include liquid crystal display (LCD) display monitors and the like. The display interface 106 can include video and/or audio information.

The memory 108 can include volatile and non-volatile memory, hard drives, solid state drives, and the like.

The power source 110 can utilize mains and/or battery power to supply power to the other components of the system 100.

Fig. 2 is a diagram illustrating a method 200 of operating the virtual development system 100 in accordance with one or more embodiments. It is appreciated that the method 200 is provided for illustrative purposes and that suitable variations are contemplated.

The one or more processors 102 are configured to receive computer aided design (CAD) data of components via the interface 104 at 202. In one example, the components are provided by an original equipment manufacturer (OEM).

The one or more processors 102 create a 3D model of the components with and without leathering foil in CAD at 204.

The one or more processors 102 convert the received CAD data into a polygon mesh using a 3D software at 206. The polygon mesh facilitates texturing of dash coverings, such as virtual leathering. A UV mapping is typically used to impart the texture.

Creating texture coordinates (UV mapping) is the basis for assigning textures to the 3D object. The UV coordinates are used to map two-dimensional images onto a three-dimensional surface. These texture coordinates are also called UVs.

For polygons, the UVs are set per control point (vertex). Thus, for each control point there is a UV coordinate. The UV coordinates can be used and manipulated to perform UV texturing.

The UV coordinates for polygons are unfolded/unwrapped like a skin to make them planar without overlaps.

To get an idea of how the scar (grain texture) will look on the 3D object, you can take a two-dimensional image.

For this purpose, the Checker material is quite suitable, and is integrated in many 3D software.

Checker is a 2D texture that creates a checkerboard pattern. This allows you to quickly see if a surface is uniform, and if there are problems such as holes, seams, distortions in the texture distribution.

The two-dimensional texture is positioned on the surface of the model. The UV mesh is used as a reference.

To create a reference to the real leathering on the real tool, the UV manipulation is used to simulate the current state.

The one or more processors 102 are configured to receive selection of desired grain texture(s) via the interface 104 at 208.

The selection of a plurality of different grain textures can be made, which could later be considered for implementation.

Virtual adjustment of the grain texture to the component as well as the topographic course can be made.

The one or more processors 102 create one or more simulations for the components using the selected grain textures and analyze the one or more simulations to determine texturing issues for areas of concern, undesired effects, sawtooth effects, and the like at 210.

The effects are digitally compensated. Thus, the UVs are post-processed (rotate, tilt, compress, distort, deform) until the desired appearance is achieved.

Another advantage of UV mapping is that it is possible to create several variants of a UV layout, and thus prepare several proposals for the customer.

Assessment can carried out/performed using an internally programmed app (Virtual Covering App) from the Surface Solutions BU within Continental (made by Mergim Shala), which is provided for the customer. This ensures a photorealistic and in real time representation in a virtual space.

In addition, some functions are programmed to provide the user with a full interactive experience. For example, the user can go to any corner of the component in real time and view everything. In addition, the user has the possibility to change materials as well as the different variants of the leathering process, and to take a direct look at the before/after representation.

By changing different environments and applied light spots, it is also possible to view further lighting influences such as gloss level etc. on the grain surface.

it is possible to interact with other team members without being in the same room or same place.

Transfer of the virtual data to a process tool, which is possible as a piece production (template) as well as an endless applicable system (embossing roller).

After the virtual representation of the grain has been approved via the interface 104 at 212, the virtual design can be implemented on a dashboard.

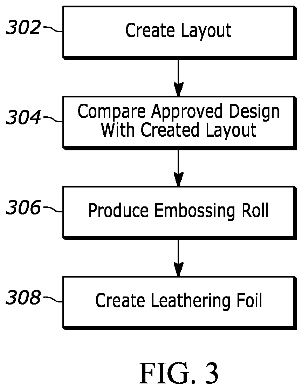

Fig. 3 is a diagram illustrating a method 300 of implementing a virtual design created by the system 100 in accordance with one or more embodiments. It is appreciated that the method 300 is provided for illustrative purposes and that suitable variations are contemplated.

A layout with leathering cuts is created at 302.

Parameters such as distortions, deformations, roundings, etc. are taken from the 3D simulation and converted into an engraving file. Additional register marks make it easier to apply the cuts to the individual objects.

The virtual design and the created layout are compared at 304. The result of the comparison is approve or disapprove. If the disapprove, the virtual design can be revised by the system 100 using the method 200.

After approval of the data set, laser data for the final laser engraving / production of an embossing roll is generated and a corresponding tool is created at 306.

A leathering foil is created and provided at 308. The leathering foil can include cutouts for the component(s).

A customer or end user typically accepts the leathering foil and/or physical master model by the customer / OEM and joint acceptance / release.

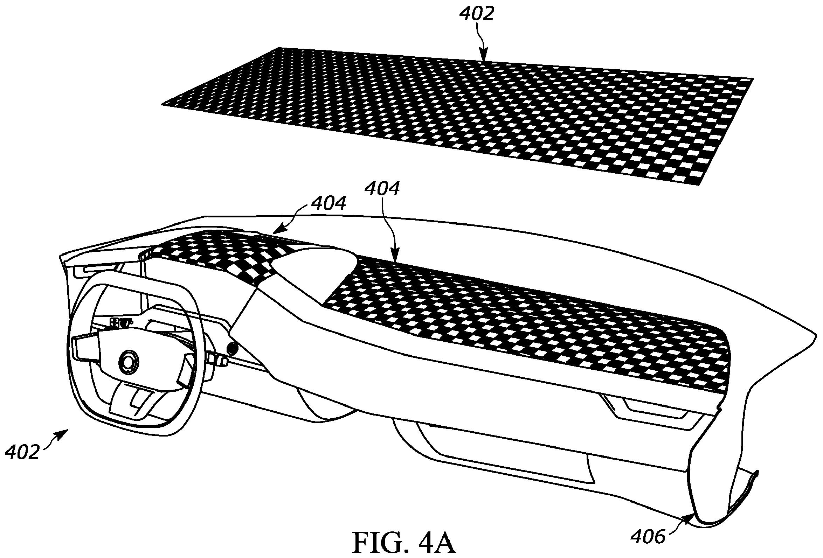

Figs. 4A to 4D illustrate an example virtual layout without using a polygon mesh checkered design in accordance with one or more embodiments.

Fig. 4A shows a created sheet or leathering foil 402 and an associated dashboard 406. There are two identified components 404 proximate opposite sides of a steering wheel.

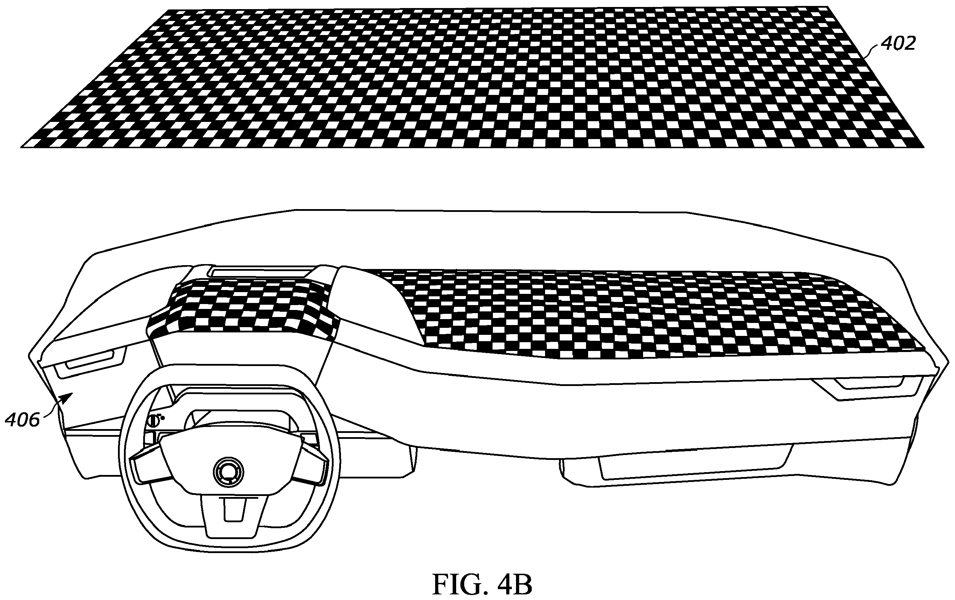

Fig 4B provides another view of the leathering foil 402.

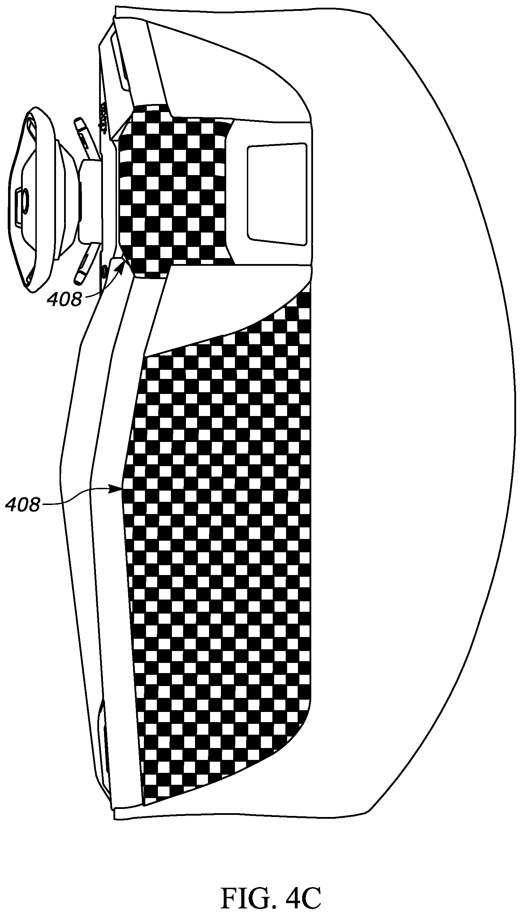

Fig. 4C is another view of the leathering foil 402. Critical issues/zones 408 are identified where the texture doesn't match to the mesh. The zones 408 exist on edges and roundings.

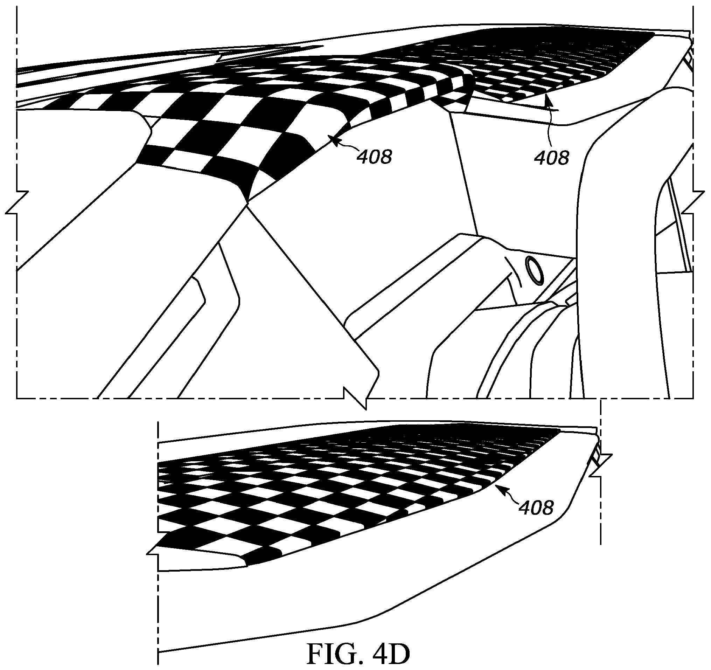

Fig. 4D is another view of the leathering foil 402 applied to the dash 406. The critical zones 408 show critical zones on roundings in the upper portion and an edges in the lower portion of the Fig. 4D.

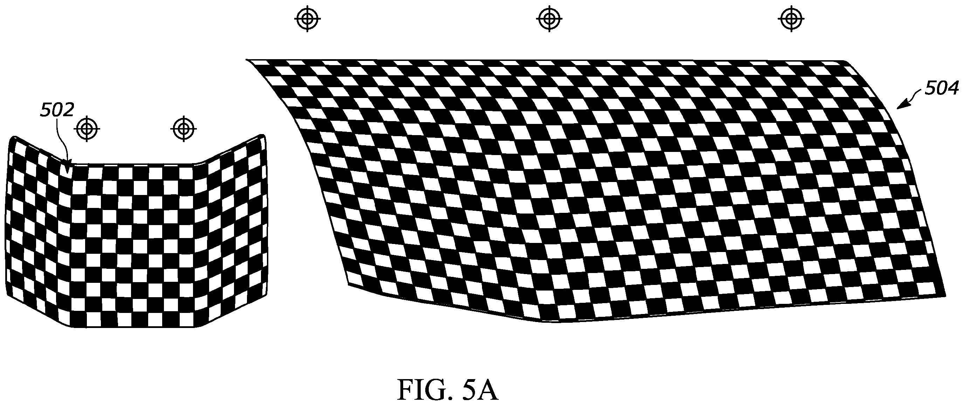

Figs. 5A to 5F illustrate an example virtual layout using a polygon mesh checkered design in accordance with one or more embodiments.

Fig. 5A shows a leathering foil layout 506 having a first cutout 502 for the steering wheel and a second cutout 504.

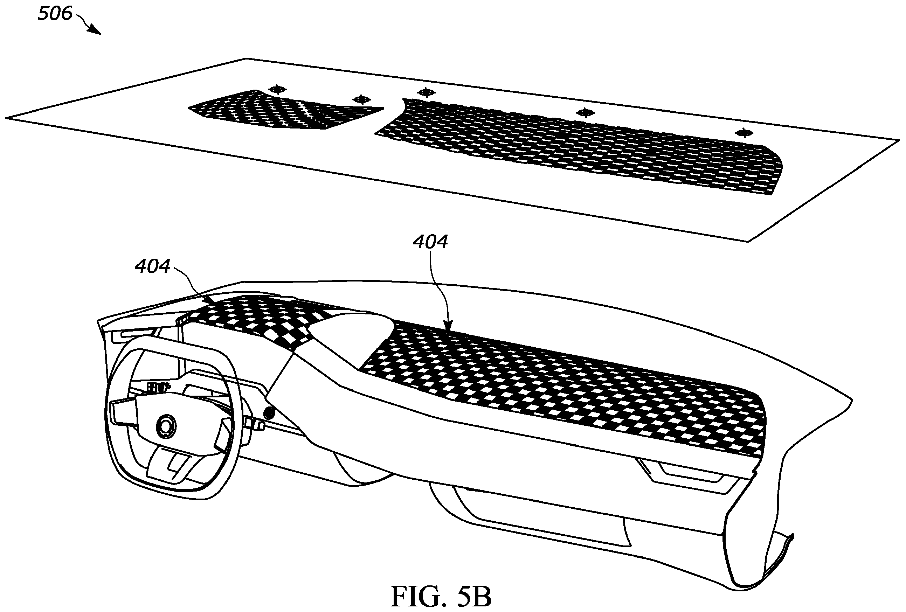

Fig. 5B is another view of the leathering foil layout 506. The defined component 404 are again shown proximate the steering wheel on the dash 406.

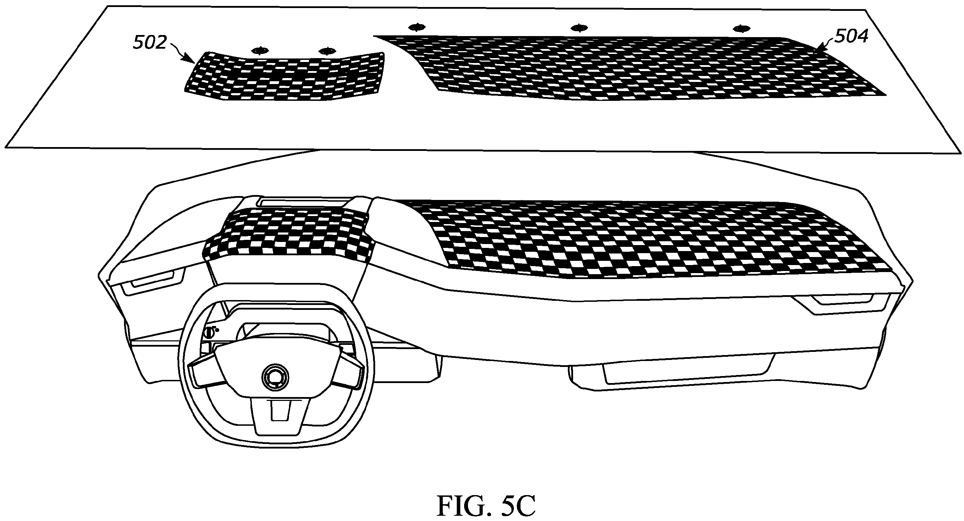

Fig. 5C is another view showing the cutouts 502 and 504 and their application on the dashboard 406.

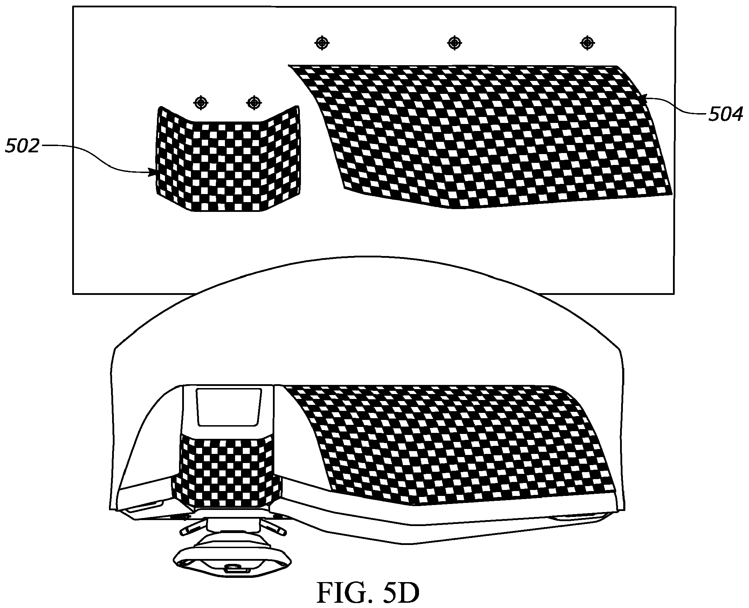

Fig. 5D is another view showing the cutouts 502 and 504 and their application on the dashboard 406.

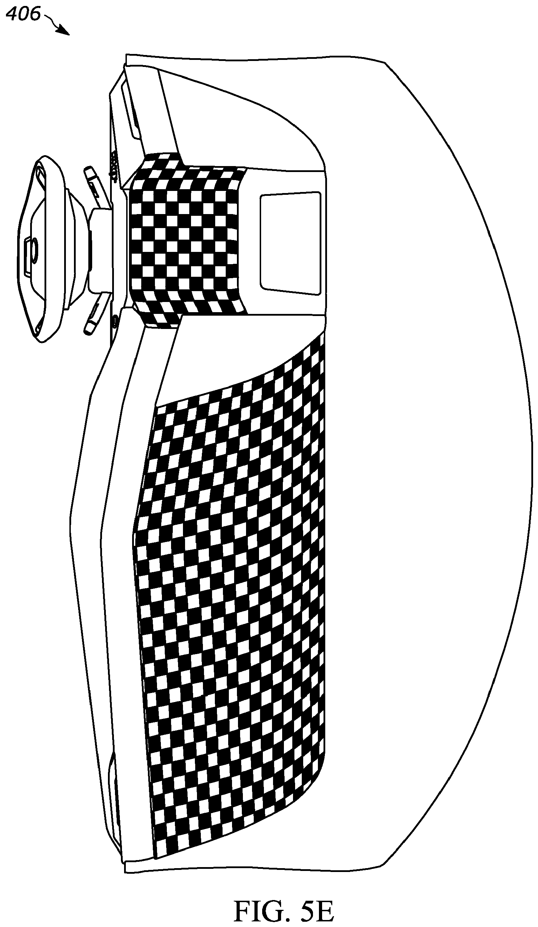

Fig. 5E is another view showing the cutouts 502 and 504 and their application on the dashboard.

Here it can be seen that the cutouts 502 and 504 match the texture to the mesh of the components.

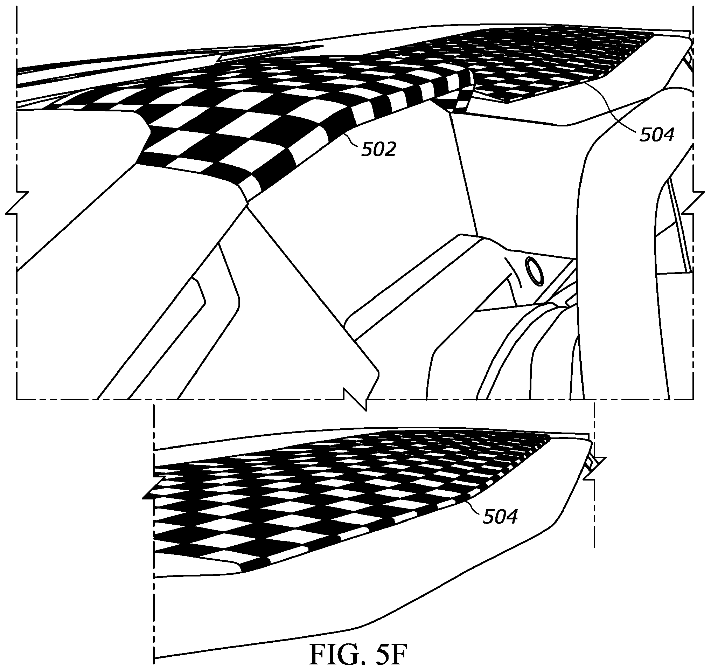

Fig. 5F is another view of the cutouts 502 and 504.

It can again be seen that the cutouts match the texture to the mesh of the components.

Figs. 5A to 5F are provided as an example for illustrative purposes. It is appreciated that other layouts for other dashboards having varied cutouts are contemplated.

It is noted that 'having' does not exclude other elements or steps and 'one' or 'one' does not exclude a multitude. It should also be noted that characteristics described with reference to one of the above examples of execution can also be used in combination with other characteristics of other examples of execution described above. Reference signs in the claims are not to be regarded as a restriction.

Various illustrative logics, logical blocks, modules, and circuits described in connection with aspects disclosed herein can be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine. A processor can also be implemented as a combination of computing devices, for example, a combination of a DSP and a microprocessor, a plurality of microprocessors, one or more microprocessors in conjunction with a DSP core, or any other such configuration. Additionally, at least one processor can comprise one or more modules operable to perform one or more of the s and/or actions described herein.

For a software implementation, techniques described herein can be implemented with modules (*e.g.,* procedures, functions, and so on) that perform functions described herein. Software codes can be stored in memory units and executed by processors. Memory unit can be implemented within processor or external to processor, in which case memory unit can be communicatively coupled to processor through various means as is known in the art. Further, at least one processor can include one or more modules operable to perform functions described herein.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (*e.g.,* hard disk, floppy disk, magnetic strips, *etc*.), optical disks (*e.g.,* compact disk (CD), digital versatile disk (DVD), etc.), smart cards, and flash memory devices (*e.g.,* EPROM, card, stick, key drive, *etc*.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data. Additionally, a computer program product can include a computer readable medium having one or more instructions or codes operable to cause a computer to perform functions described herein.

Communications media embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

Further, the actions of a method or algorithm described in connection with aspects disclosed herein can be embodied directly in hardware, in a software module executed by a processor, or a combination thereof. A software module can reside in RAM memory, flash memory, ROM memory, EPROM memory, EEPROM memory, registers, a hard disk, a removable disk, a CD-ROM, or any other form of storage medium known in the art. An exemplary storage medium can be coupled to processor, such that processor can read information from, and write information to, storage medium. In the alternative, storage medium can be integral to processor. Further, in some aspects, processor and storage medium can reside in an ASIC. Additionally, ASIC can reside in a user terminal. In the alternative, processor and storage medium can reside as discrete components in a user terminal. Additionally, in some aspects, the s and/or actions of a method or algorithm can reside as one or any combination or set of codes and/or instructions on a machine-readable medium and/or computer readable medium, which can be incorporated into a computer program product.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

As it employed in the subject specification, the term "processor" can refer to substantially any computing processing unit or device including, but not limited to including, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit, a digital signal processor, a field programmable gate array, a programmable logic controller, a complex programmable logic device, a discrete gate or transistor logic, discrete hardware components, or any combination thereof designed to perform the functions and/or processes described herein. Processors can exploit nano-scale architectures such as, but not limited to, molecular and quantum-dot based transistors, switches and gates, in order to optimize space usage or enhance performance of mobile devices. A processor may also be implemented as a combination of computing processing units.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner", "adjacent", "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

It should be added that 'having' does not exclude other elements or steps and 'one' or 'one' does not exclude a multitude. It should also be noted that characteristics described with reference to one of the above examples of execution can also be used in combination with other characteristics of other examples of execution described above. Reference signs in the claims are not to be regarded as a restriction.

Various examples are provided, however it is appreciated that suitable variations are contemplated.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus, system, and the like to perform the actions.

One general aspect includes a virtual dashboard cover layer development system having an interface, a memory storage and one or more processors. The one or more processors are configured to: receive component cad data for a dashboard component via the interface, create a 3d model based on the received component cad data, convert the 3d model to a polygon mesh checkered design, create a virtual layout design, determine component design issues for the created virtual layout, resolve the determined design issues, and create an approved layout and store in the memory storage.

Implementations may include one or more of the following features. The one or more processors further configured to receive a selected grain texture via the interface. The one or more processors further configured to create the virtual layout design based on the selected grain texture. The selected grain texture may include a wood grain pattern. The the 3d model is a polygon mesh and the one or more processors further configured to generate texture (uv) coordinates for each vertex in the polygon mesh. The one or more processors further configured to apply a selected texture to the created virtual layout. The one or more processors further configured to adjust a selected texture for the received component cad data. The one or more processors further configured to create one or more simulations for the received component cad data using a selected texture. The one or more processors further configured to determine texturing issues based on the created one or more simulations. The determined texturing issues may include undesired effects, areas of concern and sawtooth effects. The one or more processors further configured to generate a three dimensional image of the virtual layout design and provide an interactive view of the three dimensional image via a display interface. The one or more processors further configured to adjust the polygon mesh checkered design based on different environments, applied light spots, light influences and gloss level. The approved layout conveyed to an embossing roller. The one or more processors configured to create a layout with leathering cuts having parameters, the parameters including deformations and rounding. Implementations of the described techniques may include hardware, a method or process, or computer software on a computer-accessible medium.

Although a few embodiments of the disclosure have been described in detail above, those of ordinary skill in the art will readily appreciate that many modifications are possible without materially departing from the teachings of this disclosure. Accordingly, such modifications are intended to be included within the scope of this disclosure as defined in the claims.

## Claims

1. A virtual dashboard cover layer development system comprising:
an interface;
a memory storage; and
one or more processors configured:
receive component CAD data for a dashboard component via the interface;
create a 3D model based on the received component CAD data;
convert the 3D model to a polygon mesh checkered design;
create a virtual layout design;
determine component design issues for the created virtual layout;
resolve the determined design issues; and
create an approved layout and store in the memory storage.

2. The system of claim 1, the one or more processors further configured to receive a selected grain texture via the interface.

3. The system of claim 2, the one or more processors further configured to create the virtual layout design based on the selected grain texture.

4. The system of claim 3, the selected grain texture comprising a wood grain pattern.

5. The system of any one of claims 1-4, the 3D model is a polygon mesh and the one or more processors further configured to generate texture (UV) coordinates for each vertex in the polygon mesh.

6. The system of any one of claims 1-4, the one or more processors further configured to apply a selected texture to the created virtual layout.

7. The system of any one of claims 1-4, the one or more processors further configured to adjust a selected texture for the received component CAD data.

8. The system of any one of claims 1-4, the one or more processors further configured to create one or more simulations for the received component CAD data using a selected texture.

9. The system of claim 8, the one or more processors further configured to determine texturing issues based on the created one or more simulations.

10. The system of claim 9, the determined texturing issues comprising undesired effects, areas of concern and sawtooth effects.

11. The system of any one of claims 1-4, the one or more processors further configured to generate a three dimensional image of the virtual layout design and provide an interactive view of the three dimensional image via a display interface.

12. The system of any one of claims 1-4, the one or more processors further configured to adjust the polygon mesh checkered design based on different environments, applied light spots, light influences and gloss level.

13. The system of any one of claims 1-4, the approved layout conveyed to an embossing roller.

14. The system of claim 13, the one or more processors configured to create a layout with leathering cuts having parameters, the parameters including deformations and rounding.

15. The system of claim 14, the embossing roller configured to generate a leathering foil that includes cutouts for the received CAD component data.
